# EUROPÄISCHE PATENTSCHRIFT

(11) **EP 3 434 506 B1**
(45) Veröffentlichungstag und Bekanntmachung des Hinweises auf die Patenterteilung: **03.06.2020**
(21) Anmeldenummer: 18178400.0
(22) Anmeldetag: 19.06.2018
(51) Int. Cl.: B60L 1/00, H02J 1/12, H02J 7/34, B60L 3/12, B60L 58/20, B60L 58/24

(54) **STEUERVORRICHTUNG FÜR EINE ERSTE ENERGIESPEICHEREINHEIT UND EINE ZWEITE ENERGIESPEICHEREINHEIT, UND VERFAHREN ZUM BETREIBEN EINER STEUERVORRICHTUNG**
CONTROL DEVICE FOR A FIRST ENERGY STORAGE UNIT AND A SECOND ENERGY STORAGE UNIT, AND METHOD FOR OPERATING A CONTROL DEVICE
DISPOSITIF DE COMMANDE POUR UNE PREMIÈRE UNITÉ D'ACCUMULATEUR D'ÉNERGIE ET UNE SECONDE UNITÉ D'ACCUMULATEUR D'ÉNERGIE ET PROCÉDÉ DE FONCTIONNEMENT D'UN DISPOSITIF DE COMMANDE

(30) Priorität: 27.07.2017 DE 102017212891
(43) Veröffentlichungstag der Anmeldung: 30.01.2019
(73) Patentinhaber: Vitesco Technologies GmbH, 30165 Hannover (DE)
(72) Erfinder: Reichow, Dirk, 93173 Wenzenbach (DE); Völkl, Peter, 93173 Wenzenbach (DE); Scheurer, Michael, 85256 Vierkirchen (DE)

(56) Entgegenhaltungen:
- DE-T2- 60 033 833

## Beschreibung

Die Erfindung betrifft eine Steuervorrichtung für zumindest eine erste Energiespeichereinheit eines Kraftfahrzeugs und eine zweite Energiespeichereinheit des Kraftfahrzeugs. Die Steuervorrichtung weist einen nicht-flüchtigen Speicher mit einer ersten Initialkonfiguration der ersten Energiespeichereinheit und einer zweiten Initialkonfiguration der zweiten Energiespeichereinheit auf. Der nicht-flüchtige Speicher ist mit einem weiteren Speicher mit einer Adaptionskonfiguration der ersten Energiespeichereinheit und der zweiten Energiespeichereinheit datenübertragend verbunden. Weiterhin betrifft die Erfindung ein Verfahren zum Betreiben einer Steuervorrichtung für zumindest eine erste Energiespeichereinheit eines Kraftfahrzeugs und eine zweite Energiespeichereinheit des Kraftfahrzeugs. Bei dem Verfahren wird eine erste Initialkonfiguration der ersten Energiespeichereinheit und eine zweite Initialkonfiguration der zweiten Energiespeichereinheit aus einem nicht-flüchtigen Speicher ausgelesen.

Steuervorrichtungen für Energiespeichereinheiten sind bekannt. Üblicherweise wird eine Energiespeichereinheit, also beispielsweise ein Akkumulator, durch die Steuervorrichtung gesteuert oder überwacht. Anhand einer meist akkuspezifischen Konfigurationsinformation kann die Energiespeichereinheit durch die Steuervorrichtung spezifikationsgemäß gesteuert werden. Dazu gehört beispielsweise die Berücksichtigung einer Maximaltemperatur, der Ablauf eines Ladevorgangs, der Ablauf eines Entladevorgangs, die Berücksichtigung der Zellenanzahl, ein maximaler Ladestrom, ein maximaler Entladestrom oder eine maximale elektrische Spannung.

Moderne Bordnetze in Fahrzeugen können aus einem oder mehreren Energiesystemen bzw. Bordnetzzweigen bestehen, die jeweils Energie aufnehmen und/oder abgeben können. Die Steuervorrichtung bzw. ein Steuergerät übernimmt das Management der Energiesysteme. Die Energiesysteme unterliegen im Lauf der Zeit der physikalischen Entladung und tendieren zum energielosen Zustand. Das Steuergerät muss auch im energielosen Zustand ihre Einstellungen beibehalten können. Durch einen nicht-flüchtigen (Daten-)Speicher, beispielsweise einen OTP-Speicher (OTP - one-time-programmable) innerhalb des Steuergeräts kann eine dauerhafte, nicht flüchtige Konfiguration des Steuergeräts durchgeführt werden. Die im nicht-flüchtigen Speicher programmierten Einstellungen werden bei jedem Start des Steuergeräts ausgelesen und in einem Arbeitsspeicher übernommen, so dass das Steuergerät initialkonfiguriert ist.

Das Dokument DE 600 33 833 T2 offenbart als Stand der Technik eine Steuervorrichtung für mehrere Batterien mit mehreren Speichern.

Es ist Aufgabe der vorliegenden Erfindung, eine Steuervorrichtung und ein Verfahren zu schaffen, mit welcher bzw. bei welchem die Steuerung von Energiespeichereinheiten sicherer erfolgen kann.

Diese Aufgabe wird durch eine Steuervorrichtung und ein Verfahren gemäß den unabhängigen Ansprüchen gelöst.

Der Erfindung liegt die Erkenntnis zu Grunde, dass die Steuervorrichtung durch das elektrische Entkoppeln des ersten Speicherteils und des zweiten Speicherteils sicherer betrieben werden kann. So ist beispielsweise bei einem Ausfall des zweiten Speicherteils nicht auch gleich der erste Speicherteil betroffen. Insbesondere sind der erste Speicherteil und der zweite Speicherteil durch die elektrische Entkopplung auch funktional entkoppelt und eine Funktionsstörung des einen Speicherteils, insbesondere des zweiten Speicherteils, führt nicht zur Beeinflussung der Funktionalität des anderen Speicherteils, insbesondere des ersten Speicherteils.

Durch die erste Initialkonfiguration kann der Betrieb der ersten Energiespeichereinheit gesteuert werden und durch die zweite Initialkonfiguration kann der Betrieb der zweiten Energiespeichereinheit gesteuert werden. Die jeweilige Initialkonfiguration ist beispielsweise ein Parametersatz mit Grenzwerten, insbesondere Maximalwerten oder Minimalwerten, welche zum problemlosen Betrieb der jeweiligen Energiespeichereinheit vorgesehen ist. Durch die jeweilige Initialkonfiguration wird beispielsweise angegeben, welche Zellenanzahl die jeweilige Energiespeichereinheit aufweist oder aber ein maximaler Ladestrom, ein maximaler Entladestrom, eine maximale Temperatur oder eine maximale Spannung der jeweiligen Energiespeichereinheit.

Die jeweilige Initialkonfiguration ist im nicht-flüchtigen Speicher gespeichert und steht auch nach einer Stromunterbrechung wieder zur Verfügung.

Insbesondere sind der nicht-flüchtige Speicher und der weitere Speicher als Datenspeicher ausgebildet. Weiterhin insbesondere ist der nicht-flüchtige Speicher als OTP-Speicher (OTP - one time programmable) ausgebildet. Dieser Speicher lässt sich nur einmal beschreiben.

Es kann vorkommen, dass die jeweilige Initialkonfiguration angepasst werden muss, beispielsweise weil für die jeweilige Energiespeichereinheit neue Erkenntnisse gewonnen wurden, wie diese besser betrieben werden kann oder aber weil die jeweilige Energiespeichereinheit aus Altersgründen einen angepassten Betrieb erfordert. Zur Anpassung kann dann die Adapti- onskonfiguration der jeweiligen Energiespeichereinheit genutzt werden. Durch die Adaptionskonfiguration kann die jeweilige Initialkonfiguration zumindest teilweise angepasst werden. So kann die Initialkonfiguration durch die Adaptionskonfiguration selbst nach Programmierung des nicht-flüchtigen, insbesondere nur einmal programmierbaren, Speichers angepasst werden. Durch die Adaptionskonfiguration kann ein Teil der jeweiligen Initialkonfiguration oder aber die gesamte jeweilige Initialkonfiguration angepasst werden. Die Adaptionskonfiguration kann dabei entweder Werte der jeweiligen Initialkonfiguration ersetzen oder aber diese reduzieren oder erhöhen.

Vorzugsweise ist es vorgesehen, dass der erste Speicherteil mit einer ersten Datenleitung mit dem weiteren Speicher elektrisch verbunden ist und der zweite Speicherteil mit einer von der ersten Datenleitung verschiedenen zweiten Datenleitung mit dem weiteren Speicher elektrisch verbunden ist. Dadurch sind die jeweiligen Speicherteile mit unterschiedlichen Datenleitungen mit dem weiteren Speicher verbunden und bei Ausfall, insbesondere der Stromversorgung, eines der Speicherteile kann der verbleibende Speicherteil immer noch Daten zu dem weiteren Speicher übertragen.

Weiterhin ist es vorzugsweise vorgesehen, dass der erste Speicherteil, insbesondere nur, an einer Spannungsversorgung der ersten Energiespeichereinheit angeschlossen ist und/oder der zweite Speicherteil, insbesondere nur, an einer Spannungsversorgung der zweiten Energiespeichereinheit angeschlossen ist. Durch den getrennten Anschluss der jeweiligen Speicherteile an die jeweilige Spannungsversorgung können die jeweiligen Speicherteile unabhängig voneinander betrieben werden.

Weiter ist es vorzugsweise vorgesehen, dass der weitere Speicher, insbesondere nur, an einer Spannungsversorgung der zweiten Energiespeichereinheit angeschlossen ist. Die zweite Energiespeichereinheit ist insbesondere als normaler Energiespeicher bzw. Hauptenergiespeicher ausgebildet und versorgt den weiteren Speicher mit der zum Betrieb nötigen Energie. Durch die Versorgung des weiteren Speichers mit Energie aus der zweiten Energiespeichereinheit kann die Energieversorgung in ausreichender Weise ermöglicht werden.

Weiterhin vorzugsweise ist es vorgesehen, dass die Steuervorrichtung eine Funktionseinheit aufweist, welche die Steuerung der ersten Energiespeichereinheit und der zweiten Energiespeichereinheit anhand der ersten Initialkonfiguration und der zweiten Initialkonfiguration ausführt, und die Funktionseinheit durch eine dritte Datenleitung mit dem ersten Speicherteil elektrisch verbunden ist. Durch die Funktionseinheit wird dann insbesondere die funktionelle Steuerung der jeweiligen Energiespeichereinheit anhand der zugehörigen Initialkonfiguration und vorzugsweise auch anhand der zugehörigen Adaptionskonfiguration (sofern diese verfügbar ist), durchgeführt. Die Funktionseinheit steuert also die erste Energiespeichereinheit und/oder die zweite Energiespeichereinheit. Die Funktionseinheit kann beispielsweise als DSP (Digital Signal Processor), Microcontroller, FPGA (Field Programmable Gate Array) oder ASSP (Application Specific Standard Product) ausgebildet sein. Vorteilhaft ist die dritte Datenleitung, da dadurch eine Datenübertragung zwischen dem ersten Speicherteil und der Funktionseinheit möglich ist, selbst dann, wenn der weitere Speicher, beispielsweise aufgrund fehlender Spannungsversorgung, ausgefallen ist. Die dritte Datenleitung kann also als Rückfallleitung oder Absicherungsleitung angesehen werden, da sie insbesondere dann genutzt wird, wenn die erste Datenleitung und/oder der weitere Speicher ausgefallen ist.

Weiterhin ist es vorzugsweise vorgesehen, dass die Funktionseinheit mit einer Spannungsversorgung der ersten Energiespeichereinheit und eine Spannungsversorgung der zweiten Energiespeichereinheit verbunden ist. Durch das Verbinden der Funktionseinheit mit den Spannungsversorgungen der ersten Energiespeichereinheit und der zweiten Energiespeichereinheit kann die Funktionseinheit selbst dann betrieben werden, falls eine der beiden Spannungsversorgungen bzw. eine der beiden Energiespeichereinheiten ausfällt. Die Spannungsversorgung der Funktionseinheit ist dadurch insbesondere redundant ausgebildet.

Weiterhin ist es vorzugsweise vorgesehen, dass der weitere Speicher mit einer Steuereinheit, insbesondere direkt, elektrisch verbunden ist, welche dazu eingerichtet ist, die Adaptionskonfiguration abhängig von einer Funktionseinheit der Steuervorrichtung anzupassen. Durch die Steuereinheit kann der weitere Speicher befüllt oder überschrieben werden. Die Anweisung dafür bekommt die Steuereinheit insbesondere von der Funktionseinheit.

So bekommt die Steuereinheit beispielsweise von der Funktionseinheit die Anforderung, die Adaptionskonfiguration im weiteren Speicher anzupassen oder falls die Adaptionskonfiguration dort noch nicht vorhanden ist, beispielsweise nach einem Neustart, neu zu hinterlegen. Vorzugsweise ist die Steuereinheit mit einer Spannungsversorgung der zweiten Energiespeichereinheit verbunden. Die Steuereinheit kann analog zur Funktionseinheit ebenfalls beispielsweise als DSP, Microcontroller, FPGA, ASIC oder ASSP ausgebildet sein.

Weiterhin ist es vorzugsweise vorgesehen, dass die erste Energiespeichereinheit als Bedarfsenergiespeicher bzw. Absicherungsenergiespeicher ausgebildet ist und die zweite Energiespeichereinheit als Normalenergiespeicher ausgebildet ist. Der Normalenergiespeicher ist also vorzugsweise der Hauptenergiespeicher. Die zweite Energiespeichereinheit bzw. der Absicherungsenergiespeicher sichert bei Ausfall der zweiten Energiespeichereinheit einen Schalter, einen Gleichspannungswandler, eine periphere Last oder die zweite Energiespeichereinheit. Die erste Energiespeichereinheit sichert auch sich selbst. Durch den Absicherungsenergiespeicher kann beispielsweise eine Sicherheitsfunktion gegen Überspannung bereitgestellt werden.

Es kann auch vorgesehen sein, dass der weitere Speicher als flüchtiger Speicher ausgebildet ist. Bei einem flüchtigen Speicher bleiben die Daten nur solange erhalten wie die Energieversorgung vorliegt. Vorteilhaft ist der flüchtige Speicher, da dieser eine höhere Zugriffsgeschwindigkeit, insbesondere beim Lesen und beim Schreiben, aufweist als dies beispielsweise ein nicht-flüchtiger Speicher ermöglicht.

Die Erfindung betrifft auch ein erfindungsgemäßes Verfahren gemäß Anspruch 6.

Vorteilhafte Ausführungen der erfindungsgemäßen Steuervorrichtung sind in der Unteransprüchen formuliert und auch als vorteilhafte Ausführungen des erfindungsgemäßen Verfahrens anzusehen. Die gegenständlichen Komponenten der Steuervorrichtung sind jeweils dazu ausgebildet, die jeweiligen Verfahrensschritte durchzuführen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, soweit sie unter den Schutzbereich der Ansprüche fallen.

Ausführungsbeispiele der Erfindung werden nachfolgend anhand schematischer Zeichnungen näher erläutert.

Es zeigen:
- Fig. 1: eine schematische Draufsicht auf ein Kraftfahrzeug mit einem Ausführungsbeispiel einer erfindungsgemäßen Steuervorrichtung;
- Fig. 2: eine schematische Darstellung der Steuervorrichtung mit drei Energiesystemen des Kraftfahrzeugs;
- Fig. 3: eine weitere schematische Darstellung der Steuervorrichtung mit den detaillierten Energiesystemen; und
- Fig. 4: eine schematische Darstellung der Steuervorrichtung mit einem ersten Speicherteil eines nicht-flüchtigen Speichers und einem zweiten Speicherteil des nicht-flüchtigen Speichers, welche voneinander elektrisch entkoppelt sind.

In den Figuren werden gleiche oder funktionsgleiche Elemente mit den gleichen Bezugszeichen versehen.

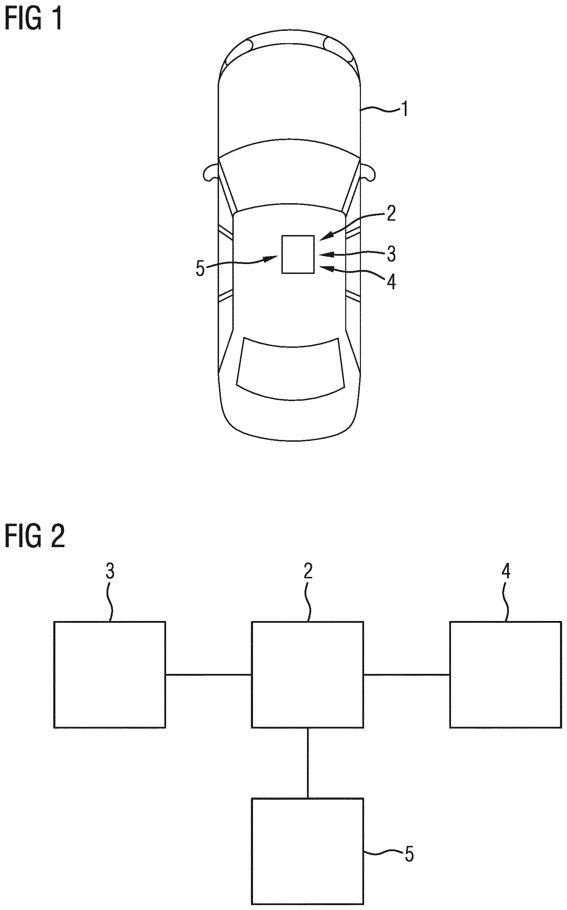

In Fig. 1 ist ein Kraftfahrzeug 1 in einer schematischen Draufsichtdarstellung gezeigt. Das Kraftfahrzeug 1 weist eine Steuervorrichtung 2 auf. Die Steuervorrichtung 2 ist mit einem ersten Energiesystem 3, einem zweiten Energiesystem 4 und einem dritten Energiesystem 5 elektrisch verbunden. Als Energiesystem wird vorliegend ein Bereich eines Stromnetzes des Kraftfahrzeugs 1 bezeichnet, welcher beispielsweise eine Energiespeichereinheit, einen Verbraucher oder eine Energieerzeugungseinheit aufweist. Das jeweilige Energiesystem kann auch als Bordnetzzweig eines Bordnetzes des Kraftfahrzeugs 1 bezeichnet werden.

Die Anordnung der Steuervorrichtung 2 und der Energiesysteme 3, 4, 5 im Kraftfahrzeug 1 ist vielfältig möglich, vorzugsweise allerdings so, dass die Anordnung funktionsgerecht erfolgt. Das Kraftfahrzeug 1 ist vorzugsweise als Personenkraftwagen ausgebildet.

Fig. 2 zeigt die Steuervorrichtung 2, das erste Energiesystem 3, das zweite Energiesystem 4 und das dritte Energiesystem 5. Die Energiesysteme 3, 4, 5 sind mit der Steuervorrichtung 2 elektrisch verbunden.

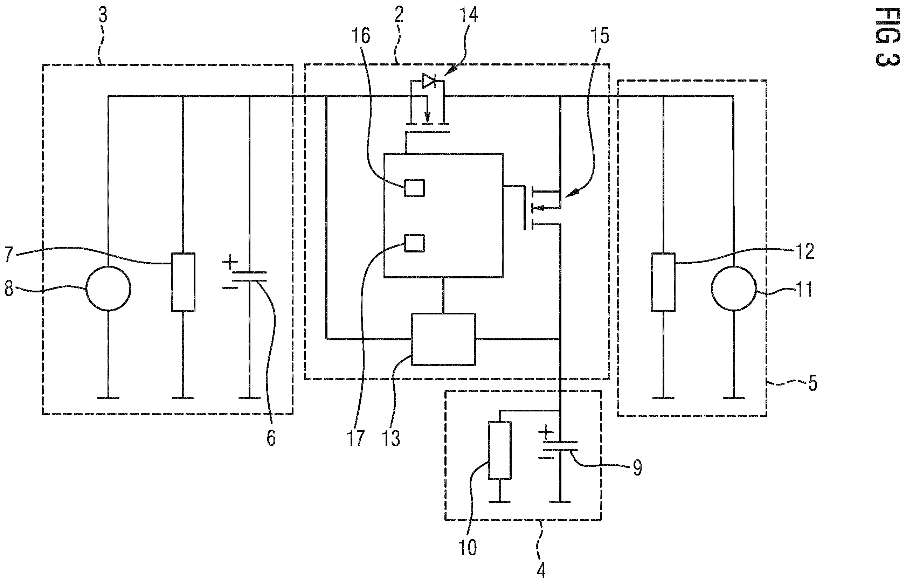

Fig. 3 zeigt ebenfalls die Steuervorrichtung 2, das erste Energiesystem 3, das zweite Energiesystem 4 und das dritte Energiesystem 5, jedoch in einer detaillierten Darstellung.

Das erste Energiesystem 3 weist eine erste Energiespeichereinheit 6, einen ersten elektrischen Verbraucher 7 und eine erste Energieerzeugungseinheit 8 auf. Die erste Energiespeichereinheit 6 ist insbesondere als Lithium-Ionen-Akkumulator ausgebildet, kann aber auch als ein in vielfältig anderer Weise ausgebildeter Akkumulator vorliegen. Der erste elektrische Verbraucher 7 ist als Energieverbraucher des Kraftfahrzeugs 1 ausgebildet und kann beispielsweise als eine Heizeinheit, ein Klimakompressor, eine Beleuchtungseinheit oder ein Aktuator ausgebildet sein. Die erste Energieerzeugungseinheit 8 ist vorzugsweise als elektrischer Generator ausgebildet.

Das zweite Energiesystem 4 weist eine zweite Energiespeichereinheit 9 und einen zweiten elektrischen Verbraucher 10 auf. Die zweite Energiespeichereinheit 9 ist insbesondere analog zur ersten Energiespeichereinheit 6 ausgebildet. Der zweite elektrische Verbraucher 10 kann analog zum ersten elektrischen Verbraucher 7 ausgebildet sein.

Das dritte Energiesystem 5 weist eine zweite Energieerzeugungseinheit 11 und einen dritten elektrischen Verbraucher 12 auf. Der dritte elektrische Verbraucher 12 kann analog zum ersten elektrischen Verbraucher 7 und/oder zum zweiten elektrischen Verbraucher 10 ausgebildet sein. Die zweite Energieerzeugungseinheit 11 kann analog zur ersten Energieerzeugungseinheit 8 ausgebildet sein.

Die Steuervorrichtung 2 weist gemäß dem Ausführungsbeispiel einen Gleichspannungswandler 13, einen ersten Schalter 14 und einen zweiten Schalter 15 auf. Weiterhin weist die Steuervorrichtung 2 einen nicht-flüchtigen Speicher 16 und einen weiteren Speicher 17 auf. Der nicht-flüchtige Speicher 16 ist insbesondere als nur einmal programmierbarer Datenspeicher ausgebildet, das heißt als sogenannter OPP-Speicher. Der weitere Speicher 17 ist vorzugsweise als flüchtiger Datenspeicher ausgebildet, beispielsweise als RAM(RAM = Random Access Memory).

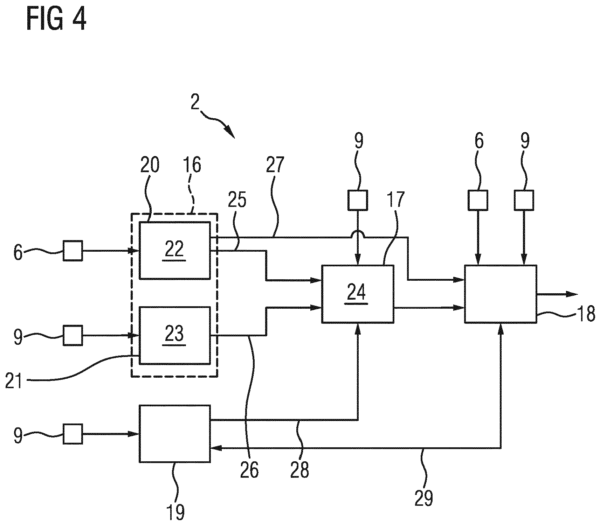

Fig. 4 zeigt ein Ausführungsbeispiel der Steuervorrichtung 2. Die Steuervorrichtung 2 weist den nicht-flüchtigen Speicher 16 und den weiteren Speicher 17 auf. Weiterhin weist die Steuervorrichtung 2 eine Funktionseinheit 18 und eine Steuereinheit 19 auf.

Die Funktionseinheit 18 und/oder die Steuereinheit 19 kann als DSP, Microcontroller, FPGA, ASIC oder ASSP ausgebildet sein. Der nicht-flüchtige Speicher 16, der weitere Speicher 17, die Funktionseinheit 18 und die Steuereinheit 19 können auf nur einen Chip angeordnet sein oder aber jeweils als separater Chip ausgebildet sein.

Der nicht-flüchtige Speicher 16 weist einen ersten Speicherteil 20 und einen zweiten Speicherteil 21 auf. Der erste Speicherteil 20 und der zweite Speicherteil 21 sind elektrisch entkoppelt. In dem ersten Speicherteil 20 ist eine erste Initialkonfiguration 22 hinterlegt und in dem zweiten Speicherteil 21 ist eine zweite Initialkonfiguration 23 hinterlegt. Die erste Initialkonfiguration 22 ist zur Steuerung der ersten Energiespeichereinheit 6 vorgesehen und die zweite Initialkonfiguration 23 ist zur Steuerung der zweiten Energiespeichereinheit 9 vorgesehen. Durch die jeweilige Initialkonfiguration 22, 23 werden beispielsweise Soll-Betriebswerte der jeweiligen Energiespeichereinheit 6, 9 vorgegeben. Diese Soll-Betriebswerte können dann mit aktuell erfassten Messwerten der jeweiligen Energiespeichereinheit 6, 9 verglichen werden. Ausgehend von dem Vergleich kann die jeweilige Energiespeichereinheit 6, 9 dann beispielsweise durch die Funktionseinheit 18 angepasst betrieben werden. Die Soll-Betriebswerte können beispielsweise als Maximaltemperatur, Minimaltemperatur, Maximalspannung, Maximalladestrom und/oder maximaler Entladestrom vorliegen. Es kann aber beispielsweise auch die Anzahl der Zellen der jeweiligen Energiespeichereinheit 6, 9 durch die jeweilige Initialkonfiguration 22, 23 bereitgestellt werden.

Im weiteren Speicher 17 ist eine Adaptionskonfiguration 24 hinterlegt. Die Adaptionskonfiguration 24 ist für die erste Energiespeichereinheit 6 und die zweite Energiespeichereinheit 9 vorgesehen. Durch die Adaptionskonfiguration 24 kann die erste Initialkonfiguration 22 und/oder die zweite Initialkonfiguration 23 angepasst werden. Das Anpassen kann nötig werden, falls die erste Energiespeichereinheit 6 und/oder die zweite Energiespeichereinheit 9 angepasst betrieben werden soll. Das angepasste Betreiben kann beispielsweise erforderlich sein, falls die jeweilige Energiespeichereinheit 6, 9 aufgrund von Alterserscheinungen anders als beim Grundinitialisierungszustand, beispielsweise dem Auslieferungszustand, betrieben werden soll. Ein Anpassen kann aber auch nötig sein, falls neue Erkenntnisse vorliegen, welche einen angepassten Betrieb nahelegen, um beispielsweise die Lebensdauer der jeweiligen Energiespeichereinheit 6, 9 zu verlängern.

Nachdem die jeweilige Initialkonfiguration 22, 23 auf dem nur einmal programmierbaren nicht-flüchtigen Speicher 16 abgelegt ist, kann das Anpassen nicht direkt im nicht-flüchtigen Speicher 16 erfolgen sondern dies erfolgt insbesondere im weiteren Speicher 17 durch die Adaptionskonfiguration 24.

Der erste Speicherteil 20 ist mit einer Spannungsversorgung der ersten Energiespeichereinheit 6 verbunden. Der zweite Speicherteil 21 ist mit einer Spannungsversorgung der zweiten Energiespeichereinheit 9 verbunden. Der weitere Speicher 17 ist mit einer Spannungsversorgung der zweiten Energiespeichereinheit 9 verbunden. Hiermit wird der erste Speicherteil 20 nur von der ersten Energiespeichereinheit 6 mit Energie versorgt und der zweite Speicherteil 21 sowie der weitere Speicher 17 werden nur von der zweiten Energiespeichereinheit 9 mit Energie versorgt.

Der erste Speicherteil 20 ist durch eine erste Datenleitung 25 mit dem weiteren Speicher 17 elektrisch verbunden. Somit können Daten vom ersten Speicherteil 20 zum weiteren Speicher 17 über die erste Datenleitung 25 übertragen werden. Der zweite Speicherteil 21 ist über eine zweite Datenleitung 26 mit dem weiteren Speicher 17 elektrisch verbunden. Somit können Daten, insbesondere die zweite Initialkonfiguration 23, von dem zweiten Speicherteil 21 über die zweite Datenleitung 26 zum weiteren Speicher 17 übertragen werden.

Die Funktionseinheit 18 ist über eine dritte Datenleitung 27 direkt mit dem ersten Speicherteil 20 elektrisch verbunden. Somit können Daten, insbesondere die erste Initialkonfiguration 22, von dem ersten Speicherteil 20 direkt über die dritte Datenleitung zur Funktionseinheit 18 übertragen werden. Durch die dritte Datenleitung 27 ist auch eine Datenübertragung vom ersten Speicherteil 20 zur Funktionseinheit 18 möglich, falls die erste Datenleitung 25 und/oder der weitere Speicher 17 ausgefallen ist. Die Funktionseinheit 18 kann also quasi als Rückfallkonfiguration die erste Initialkonfiguration 20 ohne die Adaptionskonfiguration 24 nutzen, um die erste Energiespeichereinheit 6 und/oder die zweite Energiespeichereinheit 9 auch nach dem Ausfall des zweiten Speicherteils 21, der zweiten Datenleitung 26, der ersten Datenleitung 25 und/oder des weiteren Speichers 17 zu steuern.

Die Funktionseinheit 18 ist an eine Spannungsversorgung der ersten Energiespeichereinheit 6 angeschlossen. Weiterhin ist die Funktionseinheit 18 an eine Spannungsversorgung der zweiten Energiespeichereinheit 9 angeschlossen. Die Funktionseinheit 18 wird also von der ersten Energiespeichereinheit 6 und der zweiten Energiespeichereinheit 9 mit Energie versorgt.

Die Steuereinheit 19 ist mit dem weiteren Speicher 17 direkt elektrisch verbunden. Durch die elektrische Verbindung kann die Steuereinheit 19 auf den weiteren Speicher 17 zugreifen und es können von der Steuereinheit 19 Daten, insbesondere die Adaptionskonfiguration 24, zum weiteren Speicher 17 übertragen werden. Durch die Steuereinheit 19 kann die Adaptionskonfiguration 24 angepasst werden. So kann die Steuereinheit von der Funktionseinheit 18 einen Befehl bekommen und abhängig von dem Befehl die Adaptionskonfiguration 24 zumindest teilweise anpassen oder aber neu hinterlegen.

Gemäß dem Ausführungsbeispiel ist die Steuereinheit 19 durch eine vierte Datenleitung 28 mit dem weiteren Speicher 17 elektrisch verbunden. Weiterhin ist die Funktionseinheit 18 über eine fünfte Datenleitung 29 mit der Steuereinheit 19 elektrisch verbunden. Insbesondere kann über die fünfte Datenleitung 29 in beide Richtungen bzw. bidirektional eine Datenübertragung stattfinden. So können Daten von der Steuereinheit 19 zur Funktionseinheit 18 übertragen werden. Es können aber auch Daten von der Funktionseinheit 18 zur Steuereinheit 19 übertragen werden.

Gemäß dem Ausführungsbeispiel ist die erste Energiespeichereinheit 6 als Bedarfsenergiespeicher bzw. Absicherungsspeicher ausgebildet und die zweite Energiespeichereinheit 9 als Normalenergiespeicher. Nachdem die erste Energiespeichereinheit 6 über die dritte Datenleitung direkt mit der Funktionseinheit 18 verbunden ist kann der Absicherungsenergiespeicher also dazu dienen die Funktionstüchtigkeit der Funktionseinheit 18 im Fall des Ausfalls, insbesondere der zweiten Energiespeichereinheit 9, aufrechtzuerhalten.

### Bezugszeichenliste

- 1: Kraftfahrzeug
- 2: Steuervorrichtung
- 3: erstes Energiesystem
- 4: zweites Energiesystem
- 5: drittes Energiesystem
- 6: erste Energiespeichereinheit
- 7: erster elektrischer Verbraucher
- 8: erste Energieerzeugungseinheit
- 9: zweite Energiespeichereinheit
- 10: zweiter elektrischer Verbraucher
- 11: zweite Energieerzeugungseinheit
- 12: dritter elektrischer Verbraucher
- 13: Gleichspannungswandler
- 14: erster Schalter
- 15: zweiter Schalter
- 16: nicht-flüchtiger Speicher
- 17: weiterer Speicher
- 18: Funktionseinheit
- 19: Steuereinheit
- 20: erster Speicherteil
- 21: zweiter Speicherteil
- 22: erste Initialkonfiguration
- 23: zweite Initialkonfiguration
- 24: Adaptionskonfiguration
- 25: erste Datenleitung
- 26: zweite Datenleitung
- 27: dritte Datenleitung
- 28: vierte Datenleitung
- 29: fünfte Datenleitung

## Patentansprüche

1. Steuervorrichtung (2) mit zumindest einer ersten Energiespeichereinheit (6) für ein Kraftfahrzeug (1) und einer zweiten Energiespeichereinheit (9) für das Kraftfahrzeug (1), welche einen nicht-flüchtigen Speicher (16) mit einer ersten Initialkonfiguration (22) der ersten Energiespeichereinheit (6) und einer zweiten Initialkonfiguration (23) der zweiten Energiespeichereinheit (9) aufweist,
wobei der nicht-flüchtige Speicher (16) mit einem weiteren Speicher (17) mit einer Adaptionskonfiguration (24) der ersten Energiespeichereinheit (6) und der zweiten Energiespeichereinheit (9) datenübertragend verbunden ist, wobei die Adaptionskonfiguration (24) zum mindestens teilweisen Anpassen der Initialkonfigurationen (22, 23) dient;
der nicht-flüchtige Speicher (16) einen ersten Speicherteil (20) mit der ersten Initialkonfiguration (22) und einen von dem ersten Speicherteil (20) funktional entkoppelten zweiten Speicherteil (21) mit der zweiten Initialkonfiguration (23) aufweist;
wobei der erste Speicherteil (20) an einer Spannungsversorgung der ersten Energiespeichereinheit (6) angeschlossen ist, und der zweite Speicherteil (21) an einer Spannungsversorgung der zweiten Energiespeichereinheit (9) angeschlossen ist, und
der erste Speicherteil (20) über eine erste Datenleitung (25) mit dem weiteren Speicher (17) elektrisch verbunden ist und der zweite Speicherteil (21) über eine von der ersten Datenleitung (25) verschiedene, zweite Datenleitung (26) mit dem weiteren Speicher (17) elektrisch verbunden ist, und der weitere Speicher (17) nur an der Spannungsversorgung der zweiten Energiespeichereinheit (9) angeschlossen ist; wobei die Steuervorrichtung (2) eine Funktionseinheit (18) aufweist, welche die Steuerung der ersten Energiespeichereinheit (6) und der zweiten Energiespeichereinheit (9) anhand der ersten Initialkonfiguration (22) und der zweiten Initialkonfiguration (23) ausführt;
wobei die Funktionseinheit (18) durch eine dritte Datenleitung (27) direkt mit dem ersten Speicherteil (20) elektrisch verbunden ist, und durch eine weitere Datenleitung direkt mit dem weiteren Speicher (17) elektrisch verbunden ist;
wobei die Funktionseinheit (18) eingerichtet ist, im Falle eines Ausfalls der zweiten Energiespeichereinheit (9) über die dritte Datenleitung (27) direkt von dem ersten Speicherteil (20) die erste Initialkonfiguration (22) zu erhalten.

2. Steuervorrichtung (2) nach Anspruch 1, wobei die Funktionseinheit (18) mit einer Spannungsversorgung der ersten Energiespeichereinheit (6) und einer Spannungsversorgung der zweiten Energiespeichereinheit (9) verbunden ist.

3. Steuervorrichtung (2) nach einem der vorhergehenden Ansprüche, wobei
der weitere Speicher (17) mit einer Steuereinheit (19) elektrisch verbunden ist, welche dazu eingerichtet ist die Adaptionskonfiguration (24) abhängig von einer Funktionseinheit (18) der Steuervorrichtung (2) anzupassen.

4. Steuervorrichtung (2) nach einem der vorhergehenden Ansprüche, wobei
die erste Energiespeichereinheit (6) als Bedarfsenergiespeicher ausgebildet ist und die zweite Energiespeichereinheit (9) als Normalenergiespeicher ausgebildet ist.

5. Steuervorrichtung (2) nach einem der vorhergehenden Ansprüche, wobei
der weitere Speicher (17) als flüchtiger Speicher ausgebildet ist.

6. Verfahren zum Betreiben einer Steuervorrichtung (2) mit zumindest einer ersten Energiespeichereinheit (6) für ein Kraftfahrzeug (1) und einer zweiten Energiespeichereinheit (9) für das Kraftfahrzeug (1), bei welchem eine erste Initialkonfiguration (22) der ersten Energiespeichereinheit (6) und eine zweite Initialkonfiguration (23) der zweiten Energiespeichereinheit (9) aus einem nicht-flüchtigen Speicher (16) ausgelesen werden,
die erste Initialkonfiguration (22) aus einem ersten Speicherteil (20) des nicht-flüchtigen Speichers (16) ausgelesen wird und die zweite Initialkonfiguration (22) aus einem von dem ersten Speicherteil (20) funktional entkoppelten zweiten Speicherteil (21) des nicht-flüchtigen Speichers (16) ausgelesen wird;
wobei der erste Speicherteil (20) von der ersten Energiespeichereinheit (6) mit einer Spannung versorgt wird, und der zweite Speicherteil (21) von der zweiten Energiespeichereinheit (9) mit einer Spannung versorgt wird; wobei ein weiterer Speicher (17) mit einer Adaptionskonfiguration (24) der ersten Energiespeichereinheit (6) und der zweiten Energiespeichereinheit (9), die zum mindestens teilweisen Anpassen der Initialkonfigurationen (22, 23) dient, über eine erste Datenleitung (25) vom ersten Speicherteil (20) die erste Initialkonfiguration (22) erhält und über eine von der ersten Datenleitung (25) verschiedene zweite Datenleitung (26) vom zweiten Speicherteil (21) die zweite Initialkonfiguration (22) erhält;
wobei der weitere Speicher (17) nur von der zweiten Energiespeichereinheit (9) mit einer Spannung versorgt wird; wobei die Steuerung der ersten Energiespeichereinheit (6) und der zweiten Energiespeichereinheit (9) von einer Funktionseinheit (18) der Steuervorrichtung (2) anhand der ersten Initialkonfiguration (22) und der zweiten Initialkonfiguration (23) ausgeführt wird;
wobei die Funktionseinheit (18) im Falle eines Ausfalls der zweiten Energiespeichereinheit (9) über eine dritte Datenleitung (27) direkt von dem ersten Speicherteil (20) die erste Initialkonfiguration (22) erhält.

## Claims

1. Control apparatus (2) having at least a first energy storage unit (6) for a motor vehicle (1) and a second energy storage unit (9) for the motor vehicle (1), which has a non-volatile memory (16) having a first initial configuration (22) of the first energy storage unit (6) and a second initial configuration (23) of the second energy storage unit (9),
wherein the non-volatile memory (16) is connected in a data-transmitting manner to a further memory (17) having an adaptation configuration (24) of the first energy storage unit (6) and of the second energy storage unit (9), wherein the adaptation configuration (24) is used to at least partially adapt the initial configurations (22, 23);
the non-volatile memory (16) has a first memory part (20) having the first initial configuration (22) and a second memory part (21) which is functionally decoupled from the first memory part (20) and has the second initial configuration (23);
wherein the first memory part (20) is connected to a voltage supply for the first energy storage unit (6) and the second memory part (21) is connected to a voltage supply for the second energy storage unit (9), and
the first memory part (20) is electrically connected to the further memory (17) using a first data line (25) and the second memory part (21) is electrically connected to the further memory (17) using a second data line (26) which differs from the first data line (25), and
the further memory (17) is connected only to a voltage supply for the second energy storage unit (9);
wherein the control apparatus (2) has a functional unit (18) which controls the first energy storage unit (6) and the second energy storage unit (9) on the basis of the first initial configuration (22) and the second initial configuration (23);
wherein the functional unit (18) is electrically connected directly to the first memory part (20) by means of a third data line (27) and is electrically connected directly to the further memory (17) by means of a further data line; wherein, if the second energy storage unit (9) fails, the functional unit (18) is set up to obtain the first initial configuration (22) directly from the first memory part (20) via the third data line (27).

2. Control apparatus (2) according to Claim 1, wherein
the functional unit (18) is connected to a voltage supply for the first energy storage unit (6) and to a voltage supply for the second energy storage unit (9).

3. Control apparatus (2) according to one of the preceding claims, wherein
the further memory (17) is electrically connected to a control unit (19) which is set up to adapt the adaptation configuration (24) on the basis of a functional unit (18) of the control apparatus (2).

4. Control apparatus (2) according to one of the preceding claims, wherein
the first energy storage unit (6) is in the form of an on-demand energy store and the second energy storage unit (9) is in the form of a normal energy store.

5. Control apparatus (2) according to one of the preceding claims, wherein
the further memory (17) is in the form of a volatile memory.

6. Method for operating a control apparatus (2) having at least a first energy storage unit (6) for a motor vehicle (1) and a second energy storage unit (9) for the motor vehicle (1), in which a first initial configuration (22) of the first energy storage unit (6) and a second initial configuration (23) of the second energy storage unit (9) are read from a non-volatile memory (16),
the first initial configuration (22) is read from a first memory part (20) of the non-volatile memory (16) and the second initial configuration (22) is read from a second memory part (21) of the non-volatile memory (16) which is functionally decoupled from the first memory part (20); wherein the first memory part (20) is supplied with a voltage by the first energy storage unit (6) and the second memory part (21) is supplied with voltage by the second energy storage unit (9);
wherein a further memory (17) having an adaptation configuration (24) of the first energy storage unit (6) and of the second energy storage unit (9), which is used to at least partially adapt the initial configurations (22, 23), receives the first initial configuration (22) from the first memory part (20) via a first data line (25) and receives the second initial configuration (22) from the second memory part (21) via a second data line (26) which differs from the first data line (25);
wherein the further memory (17) is supplied with a voltage only by the second energy storage unit (9);
wherein the first energy storage unit (6) and the second energy storage unit (9) are controlled by a functional unit (18) of the control apparatus (2) on the basis of the first initial configuration (22) and the second initial configuration (23);
wherein, if the second energy storage unit (9) fails, the functional unit (18) receives the first initial configuration (22) directly from the first memory part (20) via a third data line (27).

## Revendications

1. Dispositif de commande (2) comprenant au moins une première unité d'accumulation d'énergie (6) pour un véhicule automobile (1) et une deuxième unité d'accumulation d'énergie (9) pour le véhicule automobile (1), lequel possède une mémoire non volatile (16) avec une première configuration initiale (22) de la première unité d'accumulation d'énergie (6) et une deuxième configuration initiale (23) de la deuxième unité d'accumulation d'énergie (9),
la mémoire non volatile (16) étant reliée en transmission de données à une mémoire supplémentaire (17) avec une configuration d'adaptation (24) de la première unité d'accumulation d'énergie (6) et de la deuxième unité d'accumulation d'énergie (9), la configuration d'adaptation (24) servant à l'adaptation au moins partielle des configurations initiales (22, 23) ;
la mémoire non volatile (16) possédant une première partie de mémoire (20) avec la première configuration initiale (22) et une deuxième partie de mémoire (21), découplée fonctionnement de la première partie de mémoire (20), avec la deuxième configuration initiale (23) ;
la première partie de mémoire (20) étant raccordée à une alimentation électrique de la première unité d'accumulation d'énergie (6) et la deuxième partie de mémoire (21) étant raccordée à une alimentation électrique de la deuxième unité d'accumulation d'énergie (9), et
la première partie de mémoire (20) étant reliée électriquement à la mémoire supplémentaire (17) par le biais d'une première ligne de données (25) et la deuxième partie de mémoire (21) étant reliée électriquement à la mémoire supplémentaire (17) par le biais d'une deuxième ligne de données (26), différente de la première ligne de données (25), et la mémoire supplémentaire (17) étant uniquement raccordée à l'alimentation électrique de la deuxième unité d'accumulation d'énergie (9) ;
le dispositif de commande (2) possédant une unité fonctionnelle (18) qui réalise la commande de la première unité d'accumulation d'énergie (6) et de la deuxième unité d'accumulation d'énergie (9) à l'aide de la première configuration initiale (22) et de la deuxième configuration initiale (23) ;
l'unité fonctionnelle (18) étant reliée électriquement directement à la première partie de mémoire (20) par le biais d'une troisième ligne de données (27) et étant reliée électriquement directement à la mémoire supplémentaire (17) par le biais d'une ligne de données supplémentaire ;
l'unité fonctionnelle (18) étant configurée pour, dans le cas d'une panne de la deuxième unité d'accumulation d'énergie (9), obtenir la première configuration initiale (22) directement depuis la première partie de mémoire (20) par le biais de la troisième ligne de données (27).

2. Dispositif de commande (2) selon la revendication 1, l'unité fonctionnelle (18) étant reliée à une alimentation électrique de la première unité d'accumulation d'énergie (6) et à une alimentation électrique de la deuxième unité d'accumulation d'énergie (9) .

3. Dispositif de commande (2) selon l'une des revendications précédentes, la mémoire supplémentaire (17) étant reliée électriquement à une unité de commande (19), laquelle est conçue pour adapter la configuration d'adaptation (24) en fonction d'une unité fonctionnelle (18) du dispositif de commande (2).

4. Dispositif de commande (2) selon l'une des revendications précédentes, la première unité d'accumulation d'énergie (6) étant réalisée sous la forme d'un accumulateur d'énergie de réserve et la deuxième unité d'accumulation d'énergie (9) sous la forme d'un accumulateur d'énergie normal.

5. Dispositif de commande (2) selon l'une des revendications précédentes, la mémoire supplémentaire (17) étant réalisée sous la forme d'une mémoire volatile.

6. Procédé pour faire fonctionner un dispositif de commande (2) comprenant au moins une première unité d'accumulation d'énergie (6) pour un véhicule automobile (1) et une deuxième unité d'accumulation d'énergie (9) pour le véhicule automobile (1), avec lequel une première configuration initiale (22) de la première unité d'accumulation d'énergie (6) et une deuxième configuration initiale (23) de la deuxième unité d'accumulation d'énergie (9) sont chargées depuis une mémoire non volatile (16),
la première configuration initiale (22) étant chargée depuis une première partie de mémoire (20) de la mémoire non volatile (16) et la deuxième configuration initiale (22) étant chargée depuis une deuxième partie de mémoire (21) de la mémoire non volatile (16), découplée fonctionnement de la première partie de mémoire (20) ; la première partie de mémoire (20) étant alimentée avec une tension par la première unité d'accumulation d'énergie (6) et la deuxième partie de mémoire (21) étant alimentée avec une tension par la deuxième unité d'accumulation d'énergie (9) ;
une mémoire supplémentaire (17) avec une configuration d'adaptation (24) de la première unité d'accumulation d'énergie (6) et de la deuxième unité d'accumulation d'énergie (9), qui sert à l'adaptation au moins partielle des configurations initiales (22, 23), recevant la première configuration initiale (22) de la première partie de mémoire (20) par le biais d'une première ligne de données (25) et recevant la deuxième configuration initiale (22) de la deuxième partie de mémoire (21) par le biais d'une deuxième ligne de données (26), différente de la première ligne de données (25) ;
la mémoire supplémentaire (17) étant alimentée avec une tension uniquement par la deuxième unité d'accumulation d'énergie (9) ;
la commande de la première unité d'accumulation d'énergie (6) et de la deuxième unité d'accumulation d'énergie (9) étant réalisée par une unité fonctionnelle (18) du dispositif de commande (2) à l'aide de la première configuration initiale (22) et de la deuxième configuration initiale (23) ;
l'unité fonctionnelle (18), dans le cas d'une panne de la deuxième unité d'accumulation d'énergie (9), obtenant la première configuration initiale (22) directement depuis la première partie de mémoire (20) par le biais de la troisième ligne de données (27).
